# FASCICULE DE BREVET EUROPEEN

(11) **EP 4 251 435 B1**
(45) Date de publication et mention de la délivrance du brevet: **02.04.2025**
(21) Numéro de dépôt: 21823648.7
(22) Date de dépôt: 23.11.2021
(51) Int. Cl.: B60C 23/04

(54) **PROCÉDÉ DE SURVEILLANCE DES PARAMÈTRES DE FONCTIONNEMENT DES PNEUMATIQUES D'UN AÉRONEF**
VERFAHREN ZUR ÜBERWACHUNG VON BETRIEBSPARAMETERN DER REIFEN EINES FLUGZEUGS
METHOD FOR MONITORING OPERATING PARAMETERS OF THE TIRES OF AN AIRCRAFT

(30) Priorité: 25.11.2020 FR 2012119
(43) Date de publication de la demande: 04.10.2023
(73) Titulaire: Safran Landing Systems, 78140 Vélizy-Villacoublay (FR)
(72) Inventeur: CHICO, Philippe, 77550 MOISSY-CRAMAYEL (FR); ZABULON, Joël, 77550 MOISSY-CRAMAYEL (FR)
(74) Mandataire: Regimbeau
(86) Numéro de dépôt international: PCT/FR2021/052073
(87) Numéro de publication internationale: WO 2022/112707

(56) Documents cités:
- EP-A1- 3 118 030
- DE-T5- 112013 003 014
- US-A1- 2002 130 771
- US-A1- 2008 164 988
- US-A1- 2018 178 601

## Description

### DOMAINE TECHNIQUE GENERAL

L'invention concerne le domaine de la surveillance et de la maintenance prédictive des composants d'aéronef aussi appelé « Health monitoring ». Elle concerne plus précisément un procédé d'appairage des composants d'un système de vérification des paramètres de fonctionnement des pneumatiques d'aéronef.

### ETAT DE L'ART

Depuis le poste de pilotage ou durant des opérations de maintenance, il est utile de connaitre certains paramètres de fonctionnement des pneumatiques des différentes roues du train d'atterrissage d'un aéronef, on peut par exemple citer la pression des pneumatiques, mais aussi la température du gaz contenu dans les pneumatiques.

A cet effet, il est connu de recourir à des capteurs de mesure d'un tel aéronef directement installé sur la roue (par exemple des capteurs de la pression des pneumatiques, de la température du gaz contenu dans les pneumatiques etc.). Ces capteurs, souvent regroupés en un seul composant connu sous l'appellation de TPMS (pour « Tire Pressure Monitoring System »), couplé à un système de traitement de données embarqué, permettent aux pilotes d'avoir un affichage dans le poste de pilotage de l'état de la pression de chacun des pneumatiques au cours des différentes phases de vol. Durant les opérations de maintenance, les opérateurs, en se déplaçant dans le poste de pilotage, peuvent aussi consulter cet affichage afin d'obtenir l'information souhaitée.

Chaque TPMS monté sur une jante de la roue est alimenté et communique à l'aide de fils électriques qui passent à travers l'essieu et le long du train d'atterrissage. Sur certains avions une (ou plusieurs) boite électrique de jonction regroupe les fils de chaque roue, et au moins un toron de fils remonte le long du train d'atterrissage vers le reste de l'avion. Ces câblages électriques et boitier de connexion sont lourds et chers.

Une alternative connue pour réduire la masse et le cout consiste à remplacer la liaison filaire par une communication sans fil entre chaque TPMS et un ou plusieurs modules de réception installée dans l'avion, par exemple dans la soute des trains d'atterrissage ou bien dans le fuselage. Cependant, si cette communication sans fil apporte certes des gains de masse, elle apporte aussi de nouvelles problématiques par rapport à une liaison filaire. En effet, dans le cas d'une liaison filaire il est très simple d'identifier de quelle roue proviennent quelles mesures, il suffit en effet d'associer un canal d'entrée à une roue. Cependant lorsqu'un système de communication sans fil est utilisé, en particulier lorsque celui-ci est intégré dans un capot de roue comme c'est souvent le cas, il n'existe pas de moyen permettant d'identifier de quelle roue proviennent des mesures reçues, ni même si des mesures reçues ne proviennent pas des roues d'un aéronef à proximité.

Le document US2002/130771A1 décrit un procédé de surveillance suivant le préambule de la revendication 1.

Le document US2008/164988A1 décrit un dispositif de transfert de données d'un outil de contrôle de pression de pneus à un dispositif distant.

Le document US2018/178601A1 décrit un système de contrôle de pression de pneus sans fil.

Le document DE112013003014T5 décrit un système de contrôle d'état de pneus.

Le document EP3118030A1 décrit qu'un dispositif de capteur de pression de pneus d'aéronef ayant un module de communication sans fil est positionné sur le corps de chaque roue de l'aéronef.

### PRESENTATION DE L'INVENTION

Un but de l'invention est de de proposer système de surveillance des paramètres de fonctionnement des pneumatiques d'un aéronef plus robuste.

A cet effet, l'invention a pour objet, selon un premier aspect, un procédé de surveillance des paramètres de fonctionnement des pneumatiques d'un aéronef suivant la revendication 1.

Les revendications 2 à 4 concernent des modes de réalisation du procédé suivant l'invention.

Selon un deuxième aspect, l'invention a pour objet un dispositif de surveillance des paramètres de fonctionnement des pneumatiques d'un aéronef suivant la revendication 5.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
[Fig. 1] la figure 1 est une vue schématique d'un aéronef équipé d'un système de surveillance pour la mise en œuvre d'un procédé de surveillance selon l'invention ;
[Fig. 2] la figure 2 représente en perspective la partie terminale d'un train d'atterrissage comportant deux roues, chacune intégrant une partie du système de surveillance pour la mise en œuvre d'un procédé de surveillance selon l'invention ;
[Fig. 3] la figure 3 représente les étapes d'un procédé de surveillance selon l'invention.

### DESCRIPTION DETAILLEE

### Système de surveillance

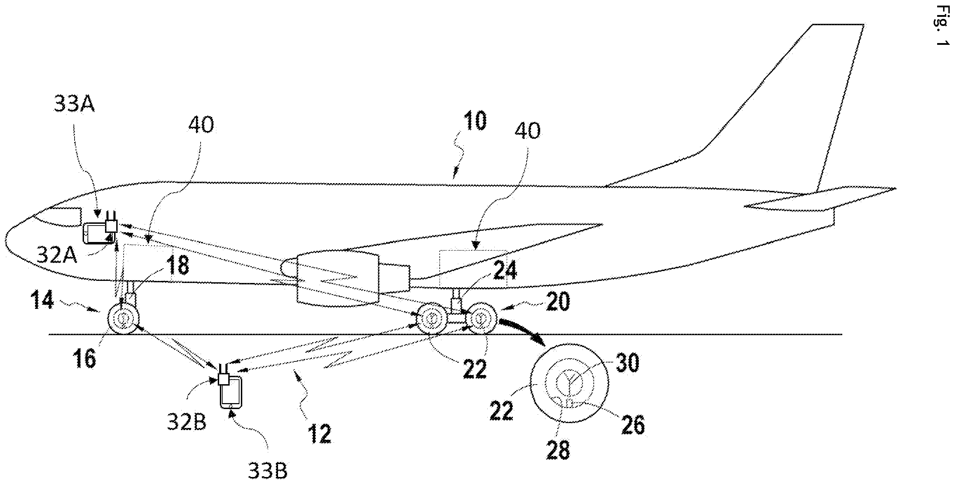

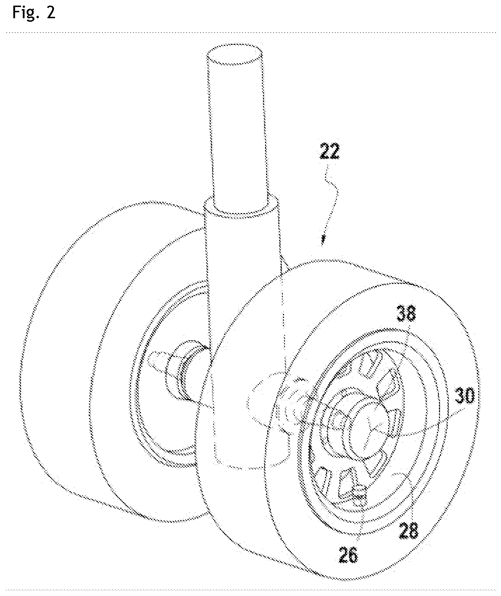

En référence aux figures 1 et 2, un système pour la mise en œuvre d'un procédé de surveillance des paramètres de fonctionnement des pneumatiques 22 d'un aéronef 10 comprend un ensemble de roues sur lesquelles sont montés les pneumatiques, ces roues étant regroupées en train d'atterrissage, généralement un premier train d'atterrissage situé à l'avant de l'aéronef et deux autres situées sensiblement au centre de l'appareil, de part et d'autre d'un axe longitudinal de l'aéronef. Ces trains d'atterrissage sont chacun associé à une soute 40, dans laquelle le train d'atterrissage peut se rétracter lors des phases de vol.

A chaque pneumatique équipant une roue de l'aéronef correspond au moins un capteur 26, (par exemple un capteur de pression) porté par la jante 28 de la roue et un dispositif d'émission sans fil 30 intégré dans le capot 38 de la roue, par l'intermédiaire duquel les paramètres de fonctionnement du pneumatique mesurés par le ou les capteurs sont transférés à un terminal opérateur 33A, 33B comprenant un module de réception sans fil 32A, 32B. Ce terminal opérateur comprend en outre un dispositif d'affichage permettant l'affichage des paramètres de fonctionnement des pneumatiques mesuré sur chacune des roues. Ce terminal utilisateur peut être réalisé sous la forme d'un terminal portatif, par exemple une tablette tactile, un ordinateur dédié à la maintenance, ou tout autre matériel spécialisé disposant de moyens permettant d'afficher les informations relatives aux paramètres de fonctionnement des pneumatiques ainsi que la roue de l'aéronef sur laquelle ces paramètres ont été mesurés, mais ce terminal opérateur peut aussi être intégré dans le cockpit de l'aéronef et relié à l'ordinateur de bord. L'utilisation d'un terminal portatif est particulièrement avantageuse dans le cadre des opérations de maintenance.

Dans un mode de réalisation préféré, lorsqu'un terminal portatif est utilisé comme terminal opérateur, le module de réception sans fil est intégré directement dans le terminal portatif, simplifiant son utilisation, et permettant de surveiller les paramètres de fonctionnement d'un aéronef même lorsque les systèmes électriques de celui-ci sont éteints. Dans un mode de réalisation alternatif, lorsque le terminal opérateur est intégré dans le cockpit de l'aéronef, le module de réception est dissocié du dispositif d'affichage et peut être inclus dans le fuselage de l'aéronef, typiquement à une position maximisant la qualité de la réception des signaux provenant des différents modules d'émission, il est aussi possible de prévoir plusieurs modules de réception situés à des endroits différents, par exemples dans les soutes de train d'atterrissage, pour les même raisons de maximisation de la qualité de réception, ces modules de réception peuvent alors être reliés aux autres éléments du terminal opérateur par une liaison filaire mais aussi par une liaison sans fil.

Le terminal opérateur est associé en outre à des moyens de traitement de données de type processeur pouvant être le processeur du terminal portatif ou bien un processeur de l'ordinateur de bord de l'aéronef, des moyens de stockage de données de type mémoire informatique pouvant être la mémoire du terminal portatif ou bien une mémoire de l'ordinateur de bord de l'aéronef, ainsi qu'une interface de saisie (ou interface utilisateur) permettant à un utilisateur d'interagir avec les données enregistrées pas les moyens de stockage de données, elle aussi pouvant être intégrée au terminal portatif ou bien associé au dispositif d'affichage intégré dans le cockpit et relié à l'ordinateur de bord. Les moyens de stockages peuvent, dans une variante de réalisation, être des moyens de stockage distant sous la forme de serveur, permettant ainsi de conserver un historique de la base de données de cartographie, ainsi que d'utiliser la même base de données de cartographie sur plusieurs terminaux portatif sans nécessiter un appairage systématique.

Les moyens de traitement, de stockage et l'interface permettent ainsi la gestion de données relatives aux modules d'émission sans fil présent sur les roues de l'aéronef, ces données, appelées « base de données de cartographie » comprennent notamment des associations entre une position de roue de l'aéronef (traditionnellement ces positions sont numérotées, la méthode de numérotation dépendant de type d'aéronef) et un identifiant unique associé au module d'émission présent sur cette roue. Ainsi, lorsqu'un module d'émission émet des données sur les paramètres de fonctionnement du pneumatique auquel il est associé, ces données peuvent être reçues puis traitées par les moyens de traitement afin d'identifier de quelle roue de l'aéronef proviennent les données reçues (voir même si ces données proviennent bien d'un aéronef particulier et non d'un autre situé à proximité lorsque ceux-ci sont stationnés au sol.

### Procédé de surveillance

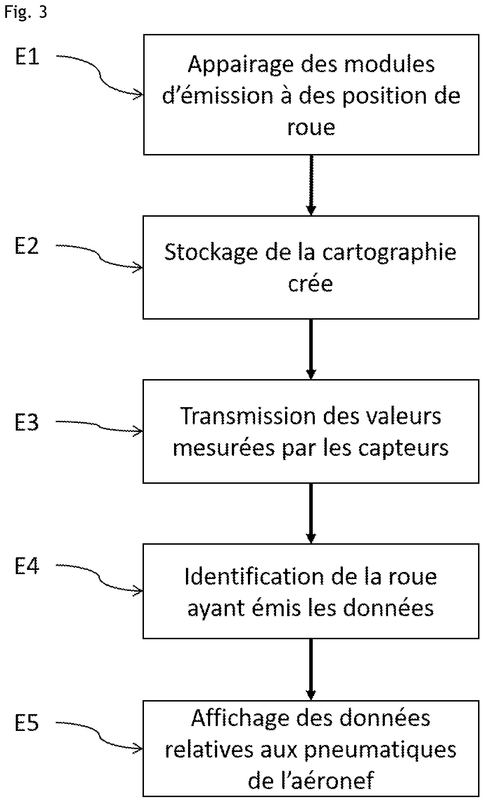

En référence à la figure 3, le procédé de surveillance mis en œuvre par le système décrit précédemment comprend les étapes suivantes. Une première étape E1 dite d'appairage durant laquelle un opérateur de l'aéronef, par exemple un opérateur de maintenance ou un pilote, relève les identifiants uniques associés à chaque module d'émission présent sur les roues de l'aéronef. Suivant un mode de réalisation, le module d'émission sans fil 30 est logé dans un capot 38 de roue de l'aéronef, l'information identifiant le module d'émission sans fil est un numéro de série et/ou un numéro de référence, qui identifie de manière unique le module 30 d'émission sans fil et qui est inscrit sur le capot 38 de roue. Pour relever les identifiants uniques associés à chaque module d'émission présent sur les roues de l'aéronef l'opérateur peut alors choisir une position de roue sur l'aéronef et rentrer via l'interface de saisie les numéros de série et/ou de référence. La base de données de cartographie associant une position de roue sur l'aéronef à un identifiant unique d'un émetteur est alors enregistrée à l'aide des moyens de stockages lors d'une étape E2.

Lorsque l'opération de saisie est réalisée à l'aide d'un terminal portatif il est de plus possible de transférer la base de données de cartographie réalisée depuis le terminal portatif vers l'ordinateur de bord de l'aéronef en utilisant de préférence une liaison de données filaire entre le terminal portatif et l'ordinateur de bord. Ce mode de fonctionnement permet ainsi d'enregistrer dans les moyens de stockage de l'ordinateur de bord une base de données de cartographie des associations entre une roue et un module d'émission sans nécessiter une nouvelle saisie par l'opérateur, et permet donc de simplifier l'opération de saisie. Il est cependant aussi possible de relever les identifiants des modules d'émission manuellement puis de les enregistrer à l'aide d'une interface de saisie dans le cockpit de l'aéronef. Cette étape d'appairage est en général réalisée une première fois lorsque l'assemblage final d'aéronef est réalisé, puis lors d'opérations de maintenance, en particulier lorsque les roues de l'aéronef sont remplacées. En effet, le replacement des roues entraine souvent un mauvais replacement des capots de roue, et donc lorsque les modules d'émission sont intégrés dans les capots de roue, des erreurs d'association entre une position de roue et un module d'émission. La mise en œuvre régulière du procédé d'appairage permet ainsi d'assurer une bonne surveillance des pneumatiques de l'aéronef.

Suite à l'étape d'appairage, le système de surveillance est alors en mesure d'identifier et d'afficher les informations relatives aux paramètres de fonctionnement des pneumatiques de l'aéronef, les étapes suivantes du procédé de surveillances peuvent alors être mises en œuvre.

Dans une étape E3, un module d'émission sans fil émet des données comprenant les valeurs mesurées par les capteurs auxquels il est relié via une liaison de données sans fil, cette liaison pouvant reposer par exemple sur la norme Bluetooth (anciennement le standard IEEE 802.15.1), sur le standard IEEE 802.15.4 (par exemple Zigbee), les protocoles de la famille IEEE 802.11 (Wi-Fi), Li-Fi, radio, etc. Les données émises peuvent en outre comprendre une information identifiant le module d'émission, par exemple son numéro de série et/ou de référence, ou bien une adresse réseau (dans ce cas, c'est cette adresse réseau qui doit être enregistrée lors de l'association entre un module d'émission et une position de roue sur l'aéronef).

Il sera évident que cette étape d'émission peut être réalisée par plusieurs modules d'émission au même moment, présents sur les roues de l'aéronef à surveiller, mais aussi lorsque celui-ci est stationné au sol, par des roues d'aéronefs à proximité équipés d'un dispositif similaire. De plus, celle-ci pourra être répétée à intervalles régulier afin d'assurer un suivi continu des paramètres de fonctionnement des pneumatiques.

Suite à la réception par un module de réception sans fil de l'aéronef surveillé, de données comprenant une information identifiant un module d'émission ainsi que des valeurs mesurées par les capteurs reliés à ce module d'émission, celui-ci va transmettre les données reçues à des moyens de traitement (par exemple ceux du terminal portatif ou ceux de l'ordinateur de bord).

Dans une étape E4, identification de la source des données émises reçues par le module de réception. Cette identification étant réalisée en comparant les informations d'identification du module d'émission reçue à la base de données de cartographie stockées sur les moyens de stockages. Lorsqu'une information associant une adresse réseau à un module d'émission est disponible il est en outre possible de réaliser un filtrage au niveau du module de réception afin de ne recevoir et transférer que des données relatives aux pneumatiques montés sur l'aéronef surveillé. Dans un mode de réalisation alternatif, cette identification peut être réalisée en amont de la réception de donnée en utilisant un fonctionnement en mode session dans lequel une connexion entre un module d'émission et un module de réception de l'aéronef à surveiller est réalisée préalablement.

Enfin, dans une étape E5, l'ensembles des informations identifiées comme provenant bien de roues de l'aéronef surveillé est affiché à l'aide d'un dispositif d'affichage afin de rendre cette information disponible aux opérateurs de l'aéronef. Les différentes mesures transmises peuvent par exemple être affichés sur une vue schématique de l'aéronef, à une position représentative de la roue de l'aéronef de laquelle proviennent la ou les mesures affichées, il est en outre possible d'accompagner ces mesures d'une valeur ou d'une plage de valeurs nominale de ces mesures indicatives d'un bon fonctionnement (par exemple la valeur de pression nominale des pneumatiques) permettant ainsi aux opérateurs de l'aéronef de planifier toute tâche de maintenance nécessaire.

## Revendications

1. Procédé de surveillance des paramètres de fonctionnement des pneumatiques d'un aéronef (10), au moyen d'un système de vérification, ledit procédé comprenant les étapes suivantes mises en œuvre par un terminal opérateur, ledit terminal opérateur (33A, 33B) comprenant un module de réception sans fil (32A, 32B) adapté pour recevoir des paramètres de fonctionnement transmis par un module d'émission sans fil (30) associé à chacune des roues d'un aéronef (10), ledit module d'émission sans fil (30) étant relié par une liaison de communication aux au moins un capteur (26), et étant configuré pour transmettre des paramètres de fonctionnement mesurés par ledit au moins un capteur via une liaison de communication sans fil (12), ledit module de réception comprenant un dispositif d'affichage (33A, 33B) configuré pour restituer ces différentes mesures de paramètres de fonctionnement de pneumatiques à un opérateur de l'aéronef,
le procédé comprenant les étapes suivantes mises en œuvre dans une unité de traitement de données dudit terminal opérateur :
E1) appairage, des modules d'émission sans fil à des positions de roue de l'aéronef de manière à obtenir pour un aéronef donné une cartographie associant les modules d'émission sans fil (30) à des positions de roue sur l'aéronef ;
E2) stockage dans une base de données de la cartographie ainsi obtenue ;
E3) transmission, au moyen d'un module d'émission au module de réception sans fil (32A, 32B), de données comprenant une information identifiant le module d'émission sans fil, ainsi qu'au moins une valeur d'un paramètre de fonctionnement de pneumatique mesuré par un capteur (26) positionné sur un pneumatique relié au module d'émission sans fil (30) ;
E4) vérification de l'existence d'une association entre l'information identifiant le module d'émission sans fil et une position de roue sur un aéronef donné dans la base de données de cartographie de manière à s'assurer que les informations reçus appartiennent à l'aéronef donné ;
E5) affichage de la au moins une valeur de paramètres de fonctionnement comprise dans les données reçues par le module de réception sans fil (32A, 32B) ainsi que de la roue sur laquelle cette au moins une valeur de paramètre de fonctionnement a été mesurée,
**caractérisé en ce que**
le module d'émission sans fil (30) est logé dans un capot de roue (38) de l'aéronef, l'information identifiant le module d'émission sans fil étant un numéro de série et/ou un numéro de référence, qui identifie de manière unique le module d'émission sans fil et qui est inscrit sur le capot de roue.

2. Procédé de surveillance selon la revendication 1, dans lequel l'étape E1 comprend des sous-étapes de :
- sélection d'une position de roue sur l'aéronef ;
- saisie d'une information identifiant un module d'émission,
ces étapes étant répétées pour chaque position de roue sur l'aéronef, afin de réaliser une cartographie des modules d'émission présent sur les roues de l'aéronef.

3. Procédé de surveillance selon la revendication 2, dans lequel l'appairage est réalisée à l'aide d'un terminal portatif puis la base de données de cartographie est transférée depuis le terminal portatif vers un ordinateur de bord de l'aéronef.

4. Procédé de surveillance selon l'une des revendications 1 à 3, dans lequel la liaison de communication sans fil (12) utilisée pour transmettre les paramètres de fonctionnement mesurés par le au moins un capteur est une liaison d'un type parmi les suivants : Bluetooth, Zigbee, Wi-Fi, Li-Fi, radio.

5. Dispositif de surveillance des paramètres de fonctionnement des pneumatiques d'un aéronef (10) comprenant :
- un module d'émission sans fil (30) associé à chacune des roues d'un aéronef (10), ledit module d'émission sans fil (30) étant relié par une liaison de communication aux au moins un capteur (26), et étant configuré pour transmettre des paramètres de fonctionnement mesurés par ledit au moins un capteur via une liaison de communication sans fil (12) ;
- un terminal opérateur, ledit terminal opérateur (33A, 33B) comprenant un module de réception sans fil (32A, 32B) adapté pour recevoir des paramètres de fonctionnement transmis par le module d'émission, ledit module de réception comprenant un dispositif d'affichage (33A, 33B) configuré pour restituer ces différentes mesures de paramètres de fonctionnement de pneumatiques à un opérateur de l'aéronef ;
- des moyens de stockage de données adapté comprenant une base de données ;
- des moyens de traitement de données adapté pour mettre en œuvre des étapes de :
E1) appairage, des modules d'émission sans fil à des positions de roue de l'aéronef de manière à obtenir pour un aéronef donné une cartographie associant les modules d'émission sans fil (30) à des positions de roue sur l'aéronef ;
E2) stockage dans la base de données de la cartographie ainsi obtenue ;
E3) transmission, au moyen d'un module d'émission au module de réception sans fil (32A, 32B), de données comprenant une information identifiant le module d'émission sans fil, ainsi qu'au moins une valeur d'un paramètre de fonctionnement de pneumatique mesuré par un capteur (26) positionné sur un pneumatique relié au module d'émission sans fil (30) ;
E4) vérification de l'existence d'une association entre l'information identifiant le module d'émission sans fil et une position de roue sur un aéronef donné dans la base de données de cartographie de manière à s'assurer que les informations reçus appartiennent à l'aéronef donné ;
E5) affichage de la au moins une valeur de paramètres de fonctionnement comprise dans les données reçues par le module de réception sans fil (32A, 32B) ainsi que de la roue sur laquelle cette au moins une valeur de paramètre de fonctionnement a été mesurée,
**caractérisé en ce que**
le module d'émission sans fil (30) est logé dans un capot de roue (38) de l'aéronef, l'information identifiant le module d'émission sans fil étant un numéro de série et/ou un numéro de référence, qui identifie de manière unique le module d'émission sans fil et qui est inscrit sur le capot de roue.

## Patentansprüche

1. Verfahren zur Überwachung der Betriebsparameter der Reifen eines Luftfahrzeugs (10) mittels eines Überprüfungssystems, wobei das Verfahren die folgenden Schritte umfasst, die von einem Bedienerterminal ausgeführt werden, wobei das Bedienerterminal (33A, 33B) ein drahtloses Empfangsmodul (32A, 32B) umfasst, das geeignet ist, Betriebsparameter zu empfangen, die von einem drahtlosen Sendemodul (30) übertragen werden, das jedem der Räder eines Luftfahrzeugs (10) zugeordnet ist, wobei das drahtlose Sendemodul (30) über eine Kommunikationsverbindung mit dem mindestens einen Sensor (26) verbunden und ausgelegt ist, um von dem mindestens einen Sensor gemessene Betriebsparameter über eine drahtlose Kommunikationsverbindung (12) zu übertragen, wobei das Empfangsmodul eine Anzeigevorrichtung (33A, 33B) umfasst, die ausgelegt ist, um diese verschiedenen Messungen von Reifenbetriebsparametern einem Bediener des Luftfahrzeugs wiederzugeben, wobei das Verfahren die folgenden Schritte umfasst, die in einer Datenverarbeitungseinheit des Bedienerterminals durchgeführt werden:
E1) Paarung der drahtlosen Sendemodule mit Radpositionen des Luftfahrzeugs, um für ein gegebenes Luftfahrzeug ein Mapping zu erhalten, das die drahtlosen Sendemodule (30) Radpositionen am Luftfahrzeug zuordnet;
E2) Speichern des derart erhaltenen Mappings in einer Datenbank;
E3) Übertragen, mittels eines Sendemoduls an das drahtlose Empfangsmodul (32A, 32B), von Daten, die eine Information umfassen, die das drahtlose Sendemodul identifiziert, sowie mindestens einen Wert eines Reifenbetriebsparameters, der von einem Sensor (26) gemessen wurde, der an einem Reifen positioniert ist, der mit dem drahtlosen Sendemodul (30) verbunden ist;
E4) Überprüfen, ob es eine Zuordnung zwischen der Information, die das drahtlose Sendemodul identifiziert, und einer Radposition an einem gegebenen Luftfahrzeug in der Mapping-Datenbank gibt, um sicherzustellen, dass die empfangenen Informationen zu dem gegebenen Luftfahrzeug gehören;
E5) Anzeigen des mindestens einen Betriebsparameterwerts, der in den von dem drahtlosen Empfangsmodul (32A, 32B) empfangenen Daten enthalten ist, sowie des Rads, an dem dieser mindestens eine Betriebsparameterwert gemessen wurde,
**dadurch gekennzeichnet, dass**
das drahtlose Sendemodul (30) in einer Radabdeckung (38) des Luftfahrzeugs untergebracht ist, wobei die das drahtlose Sendemodul identifizierende Information eine Seriennummer und/oder eine Referenznummer ist, die das drahtlose Sendemodul eindeutig identifiziert und die auf der Radabdeckung eingeschrieben ist.

2. Überwachungsverfahren nach Anspruch 1, wobei der Schritt E1 Teilschritte umfasst:
- Auswählen einer Radposition am Luftfahrzeug;
- Eingeben einer Information, die ein Sendemodul identifiziert,
wobei diese Schritte für jede Radposition am Luftfahrzeug wiederholt werden, um ein Mapping der an den Rädern des Luftfahrzeugs vorhandenen Sendemodule zu erstellen.

3. Überwachungsverfahren nach Anspruch 2, wobei die Paarung mithilfe eines tragbaren Terminals durchgeführt wird und dann die Mapping-Datenbank vom tragbaren Terminal auf einen Bordcomputer des Luftfahrzeugs übertragen wird.

4. Überwachungsverfahren nach einem der Ansprüche 1 bis 3, wobei die drahtlose Kommunikationsverbindung (12), die zum Übertragen der von dem mindestens einen Sensor gemessenen Betriebsparameter verwendet wird, eine Verbindung eines der folgenden Typen ist: Bluetooth, Zigbee, WLAN, Li-Fi, Funk.

5. Vorrichtung zur Überwachung der Betriebsparameter der Reifen eines Luftfahrzeugs (10), umfassend:
- ein drahtloses Sendemodul (30), das jedem der Räder eines Luftfahrzeugs (10) zugeordnet ist, wobei das drahtlose Sendemodul (30) über eine Kommunikationsverbindung mit dem mindestens einem Sensor (26) verbunden und ausgelegt ist, um von dem mindestens einen Sensor gemessene Betriebsparameter über eine drahtlose Kommunikationsverbindung (12) zu übertragen;
- ein Bedienerterminal, wobei das Bedienerterminal (33A, 33B) ein drahtloses Empfangsmodul (32A, 32B) umfasst, das geeignet ist, Betriebsparameter zu empfangen, die von dem drahtlosen Sendemodul übertragen werden, wobei das Empfangsmodul eine Anzeigevorrichtung (33A, 33B) umfasst, die ausgelegt ist, um diese verschiedenen Messungen von Reifenbetriebsparametern einem Bediener des Luftfahrzeugs wiederzugeben,
- geeignete Mittel zum Speichern von Daten, die eine Datenbank umfassen;
- Datenverarbeitungsmittel, die geeignet sind, folgende Schritte durchzuführen:
E1) Paarung der drahtlosen Sendemodule mit Radpositionen des Luftfahrzeugs, um für ein gegebenes Luftfahrzeug ein Mapping zu erhalten, das die drahtlosen Sendemodule (30) Radpositionen am Luftfahrzeug zuordnet;
E2) Speichern des derart erhaltenen Mappings in der Datenbank;
E3) Übertragen, mittels eines Sendemoduls an das drahtlose Empfangsmodul (32A, 32B), von Daten, die eine Information umfassen, die das drahtlose Sendemodul identifiziert, sowie mindestens einen Wert eines Reifenbetriebsparameters, der von einem Sensor (26) gemessen wurde, der an einem Reifen positioniert ist, der mit dem drahtlosen Sendemodul (30) verbunden ist;
E4) Überprüfen, ob es eine Zuordnung zwischen der Information, die das drahtlose Sendemodul identifiziert, und einer Radposition an einem gegebenen Luftfahrzeug in der Mapping-Datenbank gibt, um sicherzustellen, dass die empfangenen Informationen zu dem gegebenen Luftfahrzeug gehören;
E5) Anzeigen des mindestens einen Betriebsparameterwerts, der in den von dem drahtlosen Empfangsmodul (32A, 32B) empfangenen Daten enthalten ist, sowie des Rads, an dem dieser mindestens eine Betriebsparameterwert gemessen wurde,
**dadurch gekennzeichnet, dass**
das drahtlose Sendemodul (30) in einer Radabdeckung (38) des Luftfahrzeugs untergebracht ist, wobei die das drahtlose Sendemodul identifizierende Information eine Seriennummer und/oder eine Referenznummer ist, die das drahtlose Sendemodul eindeutig identifiziert und die auf der Radabdeckung eingeschrieben ist.

## Claims

1. A method for monitoring operating parameters of aircraft (10) tires, by means of a verification system, said method comprising the following steps implemented by an operator terminal, said operator terminal (33A, 33B) comprising a wireless receiving module (32A, 32B) suitable for receiving operating parameters transmitted by a wireless transmitting module (30) associated with each of the wheels of an aircraft (10), said wireless transmitting module (30) being connected by a communication link to the at least one sensor (26), and being configured to transmit operating parameters measured by said at least one sensor via a wireless communication link (12), said receiving module comprising a display device (33A, 33B) configured to render these different measurements of tire operating parameters to an operator of the aircraft, the method comprising the following steps implemented in a data processing unit of said operator terminal:
E1) pairing the wireless transmitting modules to wheel positions of the aircraft so as to obtain, for a given aircraft, a mapping associating the wireless transmitting modules (30) with wheel positions on the aircraft;
E2) storing the mapping thus obtained in a database;
E3) transmitting, by means of a transmitting module to the wireless receiving module (32A, 32B), data comprising information identifying the wireless transmitting module, as well as at least one value of a tire operating parameter measured by a sensor (26) positioned on a tire connected to the wireless transmitting module (30);
E4) verifying of the existence of an association between the information identifying the wireless transmitting module and a wheel position on a given aircraft in the mapping database so as to ensure that the information received belongs to the given aircraft;
E5) displaying the at least one operating parameter comprised in the data received by the wireless receiving module (32A, 32B) as well as the wheel on which this at least one operating parameter value has been measured,
**characterized in that**
the wireless transmitting module (30) is housed in a wheel cover (38) of the aircraft, the information identifying the wireless transmitting module is a serial number and/or a reference number, which uniquely identifies the wireless transmitting module and which is written on the wheel cover.

2. The monitoring method according to claim 1, wherein the step E1 comprises the sub-steps of:
- selecting a wheel position on the aircraft;
- entering information identifying a transmitting module,
these steps being repeated for each wheel position on the aircraft in order to accomplish a mapping of the transmitting modules present on the wheels of the aircraft.

3. The monitoring method according to claim 2, wherein the pairing is accomplished by means of a portable terminal, the mapping database then being transferred from the portable terminal to an on-board computer of the aircraft.

4. The monitoring method according to one of claims 1 to 3, wherein the wireless communication link (12) used to transmit the operating parameters measured by the at least one sensor is a link of a type among the following: Bluetooth, Zigbee, Wi-Fi, Li-Fi, radio.

5. A device for monitoring the operating parameters of aircraft (10) tires comprising:
- a wireless transmitting module (30) associated with each of the wheels of an aircraft (10), said wireless transmitting module (30) being connected by a communication link to at least one sensor (26), and being configured to transmit the operating parameters measured by said at least one sensor via a wireless communication link (12);
- an operator terminal, said operator terminal (33A, 33B) comprising a wireless receiving module (32A, 32B) suitable for receiving operating parameters transmitted by the transmitting module, said receiving module comprising a display device (33A, 33B) configured to render these different measurements of tire operating parameters to an operator of the aircraft;
- suitable storage means comprising a database;
- data processing means suitable for implementing the steps of:
E1) pairing the wireless transmitting modules with wheel positions of the aircraft so as to obtain, for a given aircraft, a mapping associating the wireless transmitting modules (30) with wheel positions on the aircraft;
E2) storage in the database of the mapping thus obtained;
E3) transmission of data comprising information identifying the wireless transmitting module, as well as at least one value of a tire operating parameter measured by a sensor (26) positioned on a tire connected to the wireless transmitting module (30), by means of a transmitting module to the wireless receiving module (32A, 32B);
E4) verification of the existence of an association between the information identifying the wireless transmitting module and a wheel position on a given aircraft in the mapping database so as to ensure that the information received belongs to the given aircraft;
E5) displaying of the at least one operating parameter value comprised in the data received by the wireless receiving module (32A, 32B) as well as of the wheel on which this at least one operating parameter value has been measured,
**characterized in that**
the wireless transmitting module (30) is housed in a wheel cover (38) of the aircraft, the information identifying the wireless transmitting module is a serial number and/or a reference number, which uniquely identifies the wireless transmitting module and which is written on the wheel cover.
